# EUROPEAN PATENT APPLICATION

(11) **EP 4 162 811 A1**
(43) Date of publication of application: **12.04.2023**
(21) Application number: 21946174.6
(22) Date of filing: 13.10.2021
(51) Int. Cl.: A23L 11/00, A23L 11/45, A23L 11/65, A23L 29/212, A23P 30/20

(54) **COMPOSITION FOR PRODUCING PROTEIN NOODLES WITH IMPROVED MOUTHFEEL, METHOD FOR PRODUCING PROTEIN NOODLES USING SAME, AND PROTEIN NOODLES PRODUCED BY USING SAME**

(30) Priority: 15.06.2021 KR 20210077542
(71) Applicant: Daesang Corporation, Seoul 02586 (KR)
(72) Inventor: KIM, Tae Hoon, Icheon-si Gyeonggi-do 17384 (KR); KIM, Yong Gun, Icheon-si Gyeonggi-do 17384 (KR); KIM, Seong Pil, Icheon-si Gyeonggi-do 17384 (KR); BYUN, Myung Hee, Icheon-si Gyeonggi-do 17384 (KR); JIN, Joong Hyun, Icheon-si Gyeonggi-do 17384 (KR)
(74) Representative: Prüfer & Partner mbB Patentanwälte · Rechtsanwälte
(86) International application number: PCT/KR2021/014101
(87) International publication number: WO 2022/265163

(57) **Abstract**

The present invention relates to a composition for preparing a protein-containing noodle comprising a vegetable raw material and a method for preparing a protein-containing noodle using the same, and the composition for preparing a protein-containing noodle of the present invention comprises vegetable protein, potato fiber, alginate, and starch. According to the present invention, low-calorie, high-protein-containing noodles with high protein content and excellent flavor may be prepared by using vegetable protein as the main raw material for noodles, and the mouthfeel and textural properties of the noodles may be greatly improved by using the vegetable protein in combination with potato fiber, alginate, and starch. In addition, the raw material pretreatment and noodle making process are simplified, and thus, noodles may be prepared in a simple way and may be applied to mass production.

## Description

### [Technical Field]

The present invention relates to a composition for preparing a protein-containing noodle with improved mouthfeel, a method for preparing a protein-containing noodle using the same, and a protein-containing noodle prepared thereby, and more specifically, to a composition for preparing a protein-containing noodle with excellent mouthfeel and textural properties, improved flavor and excellent productivity by using a vegetable raw material, a method for preparing a protein-containing noodle using the same, and a protein-containing noodle prepared thereby.

### [Background Art]

Noodles are a generic term for food made from long and thin dough, and are generally prepared from grain powders such as wheat flour and starch. Noodles belong to a representative high-carbohydrate food along with rice and bread, and are widely used worldwide in various foods such as Kalguksu (Korean knife-cut noodle soup), udon, spaghetti, and Guksu (Korean noodle soup).

However, as interest in health has increased recently, there is a tendency to avoid high-carbohydrate foods such as noodles. In particular, noodles have high calories and sugar levels because they are composed of refined grain powders such as wheat flour, and thus, noodles are considered as one of the unhealthy foods in terms of body weight and blood sugar management. In addition, as the negative effects of gluten present in wheat flour dough on the gut environment become known, it is increasingly recognized that noodles are a food to avoid.

In order to improve these disadvantages of the noodles, noodles with lower calories and sugar levels have been developed by replacing wheat flour with other raw materials. Representative low-calorie noodles are konjac noodles prepared using *Amorphophallus konjac* powder. For example, Korean Patent Application Laid-Open No. 10-1998-039175 describes a technology for preparing low-calorie instant noodles by stirring *Amorphophallus konjac* powder, agar powder, culinary salt and wheat flour as main components, coagulating them, and extrusion molding them. However, noodles made with *Amorphophallus konjac* as a main ingredient have mouthfeel and textural properties that are significantly different from those of ordinary noodles. In addition, *Amorphophallus konjac* was nutritionally poor because it had few nutrients, and preference was not high in terms of taste because it had no flavor.

As a method for developing low-calorie noodles which are nutritionally excellent and have improved flavor, high-protein-containing noodles prepared using protein ingredients such as tofu are being developed. For example, Korean Patent Application Laid-Open No. 10-2013-0058865 discloses a method for preparing tofu noodles comprising the steps of: mixing tofu, wheat flour and refined salt; combining the mixed raw materials and water to knead them; extrusion molding the dough; drying it; and cutting it. However, according to the above technology the noodles still contain wheat flour, and it merely describes that tofu is added to the raw material, while not disclosing a method for implementing a soft and chewy mouthfeel. In addition, since the process of extrusion molding, drying and cutting was required to make the shape of the noodles, there were disadvantages in that the process was complicated and unfavorable for mass production.

As such, various technologies have been developed to overcome the disadvantages of the conventional noodle products, but as a low-calorie noodle with a high protein content, no technology has been proposed that has the advantages of excellent mouthfeel and textural properties and excellent productivity. Therefore, there is a need for technology development for this.

### [Disclosure]

### [Technical Problem]

It is an object of the present invention to provide a composition for preparing a protein-containing noodle capable of preparing noodles with excellent mouthfeel and high protein content.

It is another object of the present invention to provide a method for preparing a protein-containing noodle using the composition.

It is another object of the present invention to provide a protein-containing noodle prepared using the composition and the method.

### [Technical Solution]

In order to achieve the above objects, the present invention provides a composition for preparing a protein-containing noodle comprising vegetable protein, potato fiber, alginic acid, and starch.

In the present invention, it is preferable that the vegetable protein is included in an amount of 60 to 98% by weight based on the total weight of the composition for preparing a protein-containing noodle.

In the present invention, it is preferable that the potato fiber is included in an amount of 0.2 to 15% by weight based on the total weight of the composition for preparing a protein-containing noodle.

In the present invention, it is preferable that the alginic acid is included in an amount of 0.5 to 15% by weight based on the total weight of the composition for preparing a protein-containing noodle.

In the present invention, it is preferable that the starch is included in an amount of 0.5 to 15% by weight based on the total weight of the composition for preparing a protein-containing noodle.

In the present invention, the vegetable protein may be a bean protein.

In the present invention, the bean may include one or more selected from the group consisting of *Glycine max,* Seoritae (green kernel black beans), *Phaseolus vulgaris, Cicer arietinum, Lens culinaris, Rhynchosia nulubilis,* and *Canavalia gladiata.*

In the present invention, the bean protein may include one or more selected from the group consisting of bean powder, bean milk, and tofu.

The present invention also provides a method for preparing a protein-containing noodle, comprising the steps of: mixing water with a composition for preparing a protein-containing noodle comprising vegetable protein, potato fiber, alginic acid and starch to form a paste; and discharging the paste to coagulation water containing calcium chloride to coagulate it in the form of noodles.

In the present invention, it is preferable to mix 80 to 500 parts by weight of water based on 100 parts by weight of the composition for preparing a protein-containing noodle.

In the present invention, it is preferable that the calcium chloride concentration in the coagulation water is 0.2 to 4% by weight based on the weight of the coagulation water.

The present invention also provides a protein-containing noodle comprising vegetable protein, potato fiber, alginic acid and starch, prepared by the method.

### [Advantageous Effects]

According to the present invention, low-calorie and high-protein-containing noodles with high protein content and excellent flavor may be prepared by using vegetable protein as the main raw material for noodles. In addition, the mouthfeel and textural properties of the noodles may be greatly improved by using the vegetable protein in combination with potato fiber, alginic acid and starch and controlling their content. Further, raw material pretreatment and noodle making process are simplified, and thus, noodles may be prepared in a simple way, and mass production is applicable.

### [Description of Drawings]

Figure 1 is a photograph of noodles prepared according to an example of the present invention.
Figure 2 is a graph showing the results of measuring hardness, elasticity and tensile strength according to a change in the content of the vegetable protein in an example of the present invention.
Figure 3 is a graph showing the results of measuring hardness, elasticity and tensile strength according to a change in the content of the potato fiber in an example of the present invention.
Figure 4 is a graph showing the results of measuring hardness, elasticity and tensile strength according to a change in the calcium chloride concentration in an example of the present invention.

### [Mode for Carrying out the Invention]

Hereinafter, specific embodiments of the present invention will be described in more detail. Unless defined otherwise, all technical and scientific terms used in the present specification have the same meaning as commonly understood by those of ordinary skill in the technical field to which the present invention pertains. In general, the nomenclature used in the present specification is those well known and commonly used in the art.

The present invention relates to a composition for preparing a protein-containing noodle with improved mouthfeel, a method for preparing a protein-containing noodle using the same, and a protein-containing noodle prepared thereby.

In the present invention, a "protein-containing noodle" refers to a noodle whose main component is protein. Conventional noodles have a high carbohydrate content by using wheat flour and the like as a main raw material, whereas the protein-containing noodles of the present invention are prepared using vegetable protein as a main raw material, and thus have relatively low carbohydrate content and high protein content compared to conventional noodles.

The composition for preparing a protein-containing noodle of the present invention may comprise vegetable protein, potato fiber, alginic acid, and starch.

According to the present invention, protein-containing noodles with high protein content and excellent flavor may be prepared by using vegetable protein as the main raw material for noodles. In addition, in the present invention, by discharging the dough made using the vegetable protein, potato fiber, alginic acid and starch as raw materials into coagulation water containing calcium chloride to make noodles, the mouthfeel and textural properties of protein-containing noodles may be greatly improved, noodles may be prepared without flour, and raw material pretreatment and noodle making process may be simplified.

In the present invention, the vegetable protein may refer to a plant-derived processed product with a high protein content, such as bean, peanut, walnut, almond, and pine nut. By using the vegetable protein, noodles with a high protein content may be prepared, the noodle strip may be formed without flour by the coagulation reaction of calcium chloride in the coagulation water with the vegetable protein, and the mouthfeel and textural properties of protein-containing noodles may be improved. In addition, the textural properties of the noodles are improved by the combination of vegetable protein and potato fiber, and thus, there is the effect that the protein-containing noodles do not swell or loosen even if time passes or heat is applied.

In the present invention, the vegetable protein is preferably a bean protein, wherein the bean may include *Glycine max,* Seoritae (green kernel black bean), *Phaseolus vulgaris, Cicer arietinum, Lens culinaris, Rhynchosia nulubilis, Canavalia gladiata,* and the like.

The bean protein may include a bean-derived food processed product, for example, bean powder, bean milk, tofu, and the like. Among them, the bean milk may be preferably used in terms of convenience in preparing noodles. When the bean milk is used as the bean protein, since a paste may be prepared by dissolving the raw material and alginic acid in liquid bean milk, the raw material pretreatment step may be simplified.

The bean milk may be a concept including a food processed product prepared by filtering out solid masses after wet grinding beans with water, and a food processed product in the form of a dispersion prepared by mixing bean powder with water. In addition, the bean milk having 2 to 11 brix, preferably 3 to 8 brix may be used in terms of mouthfeel, textural properties, flavor, nutrient and productivity.

In the present invention, the vegetable protein may be included in an amount of 60 to 98% by weight, preferably 75 to 97% by weight, and more preferably 87 to 96% by weight based on the total weight of the composition for preparing a protein-containing noodle. The protein component included in the vegetable protein may be included in an amount of 0.4 to 3.8% by weight, preferably 0.5 to 3.7% by weight, and more preferably 0.6 to 3.6% by weight based on the total weight of the composition for preparing a protein-containing noodle.

If the content of the vegetable protein is too low, it is difficult to prepare high-protein-containing noodles due to the low protein content, the savory taste of beans may be weak to reduce the flavor, and the noodles may exhibit a hard mouthfeel. On the other hand, if the content of the vegetable protein is too high, problems may arise in that it may be difficult to form a paste, and the noodles may be easily brittle to make it difficult to eat.

In the present invention, the potato fiber refers to potato-derived dietary fiber, and specifically, a powdered dietary fiber component obtained from potatoes may be used. In the present invention, since the potato fiber is combined with the vegetable protein to improve the textural properties and water holding capacity of the protein-containing noodles, there is an advantage in that the protein-containing noodles do not swell or loosen even if time passes after the noodles are prepared or the noodles are cooked with heat. In addition, the potato fiber also contributes to playing a role in improving nutrition by supplying dietary fiber to the noodles.

In the present invention, the potato fiber may be included in an amount of 0.2 to 15% by weight, preferably 0.3 to 8% by weight, more preferably 0.5 to 2% by weight, and much more preferably 0.7 to 1.8% by weight based on the total weight of the composition for preparing a protein-containing noodle. If the content of the potato fiber is too low, the noodles may have a hard and chewy mouthfeel to make it difficult to eat. If the content of the potato fiber is too high, advantages may arise in that the noodles break easily, and thus, cooking and eating are unsuitable.

The alginic acid is a polysaccharide acid derived from brown algae such as kelp and sea mustard, and may be represented by the molecular formula (C₆H₈O₆)ₙ. In the present invention, the alginic acid plays a role in forming the shape of protein-containing noodles and controlling the mouthfeel by forming egg-box structure with calcium chloride in the coagulation water. In addition, since the alginic acid has an effect of discharging sodium, wastes, or heavy metals from the body, there is also an advantage in terms of health.

The alginic acid may include alginic acid, a pharmaceutically acceptable salt thereof, or a mixture thereof. If the alginic acid is used in salt form, sodium, propylene glycol, ammonium, calcium, potassium, sulfate, hydrogen sulfate, phosphate, dihydrogen phosphate, acetate, succinate, citrate, tartrate, lactate, mandelate, methanesulfonate or p-toluenesulfonate salts of the alginic acid may be used. Preferably, sodium, propylene glycol, ammonium, calcium or potassium salts of the alginic acid may be used. In general, alginic acid is distributed and sold in the form of a powder such as sodium alginate or potassium alginate, and may be used by dissolving it in water.

In the present invention, the alginic acid may be included in an amount of 0.5 to 15% by weight, preferably 0.7 to 10% by weight, and more preferably 1 to 5% by weight based on the total weight of the composition for preparing a protein-containing noodle. If the content of the alginic acid is too low, problems may occur that the hardness and elasticity of the noodles are low, and thus, the shape of the noodles is not maintained well, the chewy mouthfeel is lowered, and the noodles are easily broken. On the other hand, if the content of the alginic acid is too high, problems may arise in that the noodles become too hard to degrade mouthfeel and make it difficult to eat.

In the present invention, the starch acts as a thickener by inducing a gelatinization reaction in the noodle making process. The gelatinization reaction refers to a reaction in which the viscosity increases when starch is heated with water. Specifically, if heat is applied to the starch, the starch particles absorb moisture to swell, and the micellar structure is destroyed, so that the starch particles form a colloidal solution and increase the viscosity.

Corn starch, waxy corn starch, tapioca starch, potato starch, sweet potato starch, wheat starch, sugar cane starch, modified starch thereof, or a combination thereof may be used as the starch. The modified starch may be one obtained by chemically modifying natural starch using etherification, esterification, acetylation, cross-linking, oxidation, or the like. If the modified starch is used, compared to the case where the natural starch is used, the gelatinization temperature of the dough is lowered and the aging of the noodles is inhibited, and thus, the stability of the dough may be improved.

In the present invention, the starch may be included in an amount of 0.5 to 15% by weight, preferably 1 to 10% by weight, and more preferably 1.5 to 8% by weight based on the total weight of the composition for preparing a protein-containing noodle. If the content of the starch is too low, it may be difficult to form a noodle strip and the viscoelasticity may be low. If the content of the starch is too high, elasticity may be too strong, and thus, mouthfeel preference may be reduced.

In addition, the composition for preparing a protein-containing noodle of the present invention may further comprise additives such as seasonings, sub-ingredients, and food additives commonly used in the art, for example, salt (culinary salt), vitamins, amino acids, colorants, fragrances, sweeteners, and preservatives, within a range that does not impair the taste and physical properties of noodles. The additive may be included in an amount of 5% by weight or less, preferably 3% by weight or less, based on the total weight of the composition for preparing a protein-containing noodle.

For example, the composition for preparing a protein-containing noodle of the present invention may comprise nutrients such as vitamin A, vitamin C, vitamin D, vitamin E, vitamin B1, vitamin B2, vitamin B6, vitamin B12, niacin, biotin, folate, and pantothenic acid; minerals such as calcium (Ca), chromium (Cr), magnesium (Mg), manganese (Mn), and copper (Cu); amino acids such as lysine, tryptophan, cysteine, and valine; preservatives such as potassium sorbate, sodium benzoate, salicylic acid, and sodium dehydroacetate; antioxidants such as butylhydroxyanisole and dibutylhydroxytoluene; coloring agents such as sodium nitrite; natural pigments such as chlorella, golden chlorella, sweet pumpkin powder, purple sweet potato powder, and beets; bleaching agents such as sodium sulfite; seasonings such as culinary salt, turmeric, pepper, and monosodium glutamate; sweeteners such as sucrose, dulcin, cyclamate, and saccharin; fragrances such as vanillin and lactones; swelling agents such as alum and D-potassium hydrogen tartrate; and the like.

In the present invention, the protein-containing noodle may be prepared by mixing water with the composition for preparing a protein-containing noodle to form a paste, and discharging the paste from a nozzle and dropping it into coagulation water to coagulate it in the form of noodles. According to this method, raw material pretreatment and noodle making process are simplified, and thus, noodles may be prepared in a simple way, and mass production is easy.

Specifically, water is mixed with the composition for preparing a protein-containing noodle and stirred to form a paste. In this case, water may be mixed in an amount of 80 to 500 parts by weight, preferably 100 to 350 parts by weight, and more preferably 150 to 250 parts by weight based on 100 parts by weight of the composition for preparing a protein-containing noodle. In addition, when mixing, it is preferable to sufficiently stir to improve the quality of the noodles by preventing the formation of air bubbles. The stirring may be performed at a temperature of 80 to 100°C, and when the paste is prepared, it may be cooled to a temperature of 20°C or less.

Then, the paste is continuously discharged from the nozzle and dropped into the coagulation water. Thereby, the paste is immersed in the coagulating water to coagulate in the form of long noodles, and protein-containing noodles are prepared. In this case, the thickness and shape of the noodles may be controlled by changing the size and shape of the nozzle. For example, a cross section of the outlet of the nozzle may be circular or rectangular. In addition, noodles having a desired thickness, for example, a thickness of 0.5 to 5 mm may be prepared by controlling the size of the nozzle, and noodles having a desired length, for example, a length of 10 to 30 cm may be prepared by controlling the discharge speed, and the like.

In the present invention, the coagulation water may include calcium chloride. The calcium chloride undergoes a coagulation reaction with vegetable proteins present in the paste, and may form egg-box structure with alginic acid. By the complex reaction of these paste raw materials and calcium chloride, the shape is maintained, and hard, elastic and chewy noodles are formed. In this case, the textural properties and mouthfeel of the protein-containing noodles may be optimized by adjusting the calcium chloride concentration in the coagulation water.

The concentration of the calcium chloride may be 0.2 to 4.0% by weight, preferably 0.5 to 1.5% by weight, and more preferably 0.8 to 1.2% by weight based on the weight of the coagulation water. If the content of calcium chloride in the coagulation water is too low, it is difficult to form a noodle strip, and the prepared noodles are easily crumbled, resulting in low stability and poor mouthfeel. If the content of calcium chloride is too high, the noodles may have an excessively hard and chewy mouthfeel, and thus, consumer preference may be reduced.

The coagulated noodles may be washed with water and subjected to a step of filling packaging with water. In this case, the temperature of the water may be 0 to 50°C, preferably 10 to 30°C.

When the filling packaging is completed, an additional heat treatment step may be performed for sterilization. In this case, the heat treatment temperature may be 70 to 100°C, preferably 80 to 95°C, and the heat treatment time may be 30 minutes to 2 hours, preferably 40 minutes to 1 hour.

Thereafter, they may be cooled to a temperature of 10°C or less, and stored and distributed in a refrigerated or frozen state.

The protein-containing noodles prepared in this way may be used as noodles for various dishes, such as Somyeon (thin noodles), Joongmyeon (mid thick noodles), Kalguksu noodles, udon noodles, spaghetti noodles, and the like.

Since the protein-containing noodles of the present invention contain vegetable protein, the protein content is high and nutritionally excellent, and the original savory taste of beans is preserved and the flavor is excellent. In addition, the mouthfeel and textural properties are greatly improved by the combined use of the vegetable protein and specific vegetable raw materials, and the reaction between the raw material and the coagulation water, and thus, consumer preference is excellent. In addition, the noodles do not swell or loosen as time passes even in a state of being filling packaged with water, and thus, they have the advantage of excellent storage and stability.

### EXAMPLES

Hereinafter, the present invention will be described in more detail through examples. However, these Examples show some experimental methods and compositions only for illustrating the present invention, and the scope of the present invention is not limited to these Examples.

### Preparative Example: Preparation of protein-containing noodles comprising vegetable protein

Bean milk (3 brix), potato fiber (POTEX CROWN), waxy corn starch (HeatSTA), sodium alginate, refined salt, preservative and golden chlorella are mixed with purified water and stirred at a temperature of 90°C to 100°C to remove air bubbles, and cooled to 20°C or less to obtain a paste. A noodle strip was formed by injecting the paste from a circular nozzle and dropping it into coagulation water containing calcium chloride. Thereafter, the noodles were washed with tap water, filled and packaged with water, sterilized at 88°C or more, cooled to 10°C or less, and then refrigerated.

### Experimental method: Method of measuring the physical properties and preference of protein-containing noodles

Hardness, elasticity and tensile strength were measured using a physical property analyzer (TA. XT plus, Stable Micro Systems, Surrey, UK). Each experiment was performed 5 times. The hardness is the result of measuring the force when three noodle strips are cut by placing them adjacent to each other and compressing them with a button trigger for hardness analysis. The elasticity is the result of measuring the time when one noodle strip is cut by fixing and stretching it to the grip arm trigger, and the tensile strength is the result of measuring the force when the noodle strip is cut in the same test as elasticity.

### Experimental Example 1: Characterization of protein-containing noodles according to bean milk content

Using the method of Preparative Example, protein-containing noodles were prepared by varying the content of bean milk, and physical properties and preference of each noodle were measured.

The experiment was performed by adjusting the content of bean milk to 0, 25, 50, 75, and 100 parts by weight based on 100 parts by weight of purified water. As for the other components, 0.7 parts by weight of potato fiber, 1.7 parts by weight of waxy corn starch, 1.5 parts by weight of sodium alginate, 0.5 parts by weight of refined salt, 0.5 parts by weight of preservative, and 0.1 parts by weight of golden chlorella were used in the same way, and were dropped into coagulation water having a calcium chloride concentration of 1.2% by weight based on the total weight of the coagulation water.

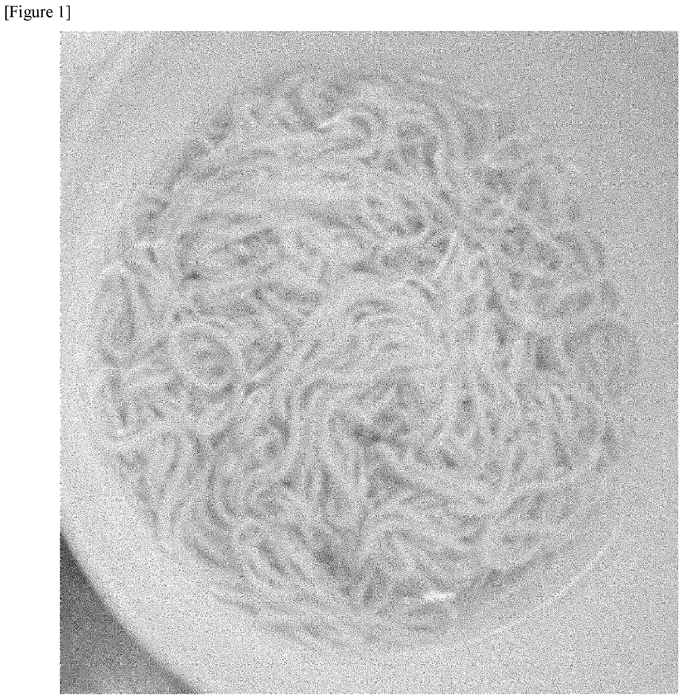

Figure 1 is a photograph of protein-containing noodles prepared using 50 parts by weight of bean milk. It can be seen that the noodle strips are well formed without clumping.

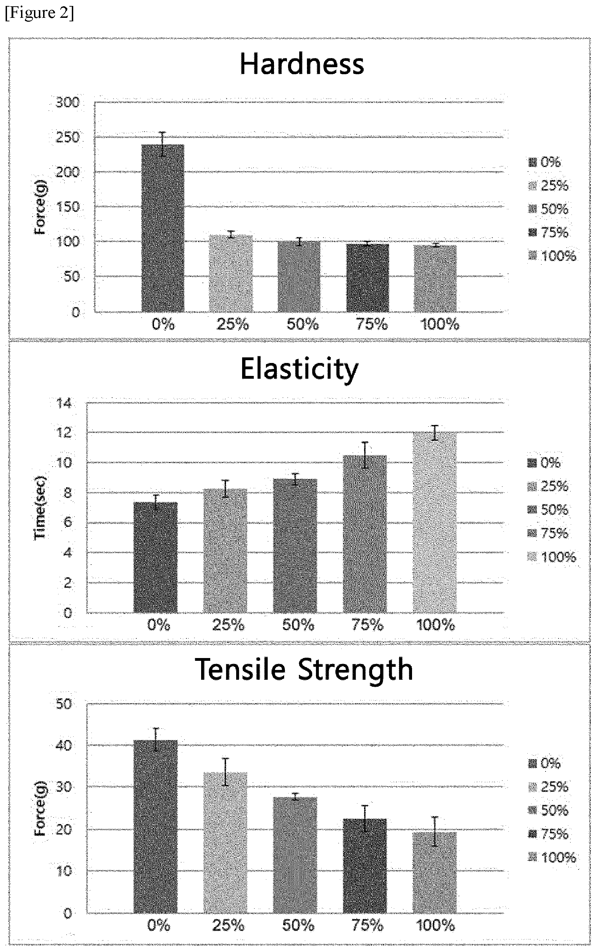

Hardness, elasticity, and tensile strength were measured for each prepared noodle, and the results are shown in Figure 2.

Referring to the results of Figure 2, even when bean milk is not added, noodles may be formed, but the texture is too hard and chewy, making it very inconvenient to eat. On the other hand, if the content of bean milk was 25 parts by weight or more based on 100 parts by weight of purified water, soft noodles were formed, and until it was 75 parts by weight, soft, elastic and chewy noodles were formed, and in particular, when it was 50 parts by weight, the textural properties and mouthfeel were the most excellent. However, when the bean milk is included in an amount of 100 parts by weight, it was seen that noodles has elasticity but breaks easily.

Therefore, it was confirmed that protein-containing noodles with excellent textural properties and mouthfeel may be prepared by controlling the content of vegetable protein within a specific range.

### Experimental Example 2: Characterization of protein-containing noodles according to potato fiber content

Using the method of Preparative Example, protein-containing noodles were prepared by varying the content of potato fiber, and physical properties and preference of each noodle were measured.

95 parts by weight of bean milk, 1.7 parts by weight of waxy corn starch, 1.5 parts by weight of sodium alginate, 0.5 parts by weight of refined salt, 0.5 parts by weight of preservative, and 0.1 parts by weight of golden chlorella were used based on 100 parts by weight of purified water, and potato fiber was added by adjusting the content of potato fiber to be 0, 0.5, 1, 2 and 2% by weight based on the total weight of the composition excluding purified water. The prepared paste was dropped into coagulation water having a calcium chloride concentration of 1.2% by weight based on the total weight of the coagulation water.

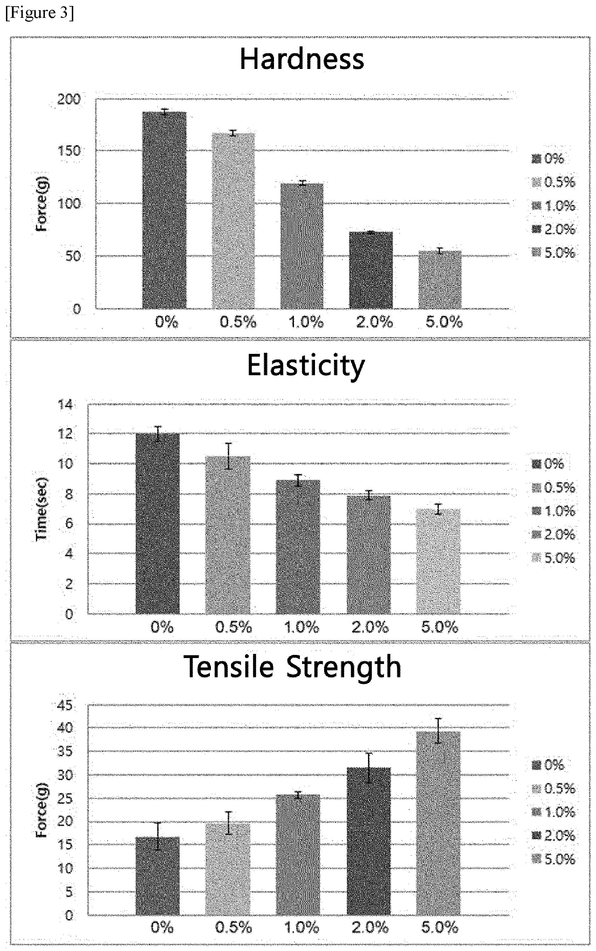

Hardness, elasticity, tensile strength, and mouthfeel were measured for each prepared noodle, and the results are shown in Figure 3.

Referring to the results of Figure 3, even when potato fiber is not added, noodles may be formed, but the physical properties of the noodles are not good due to the hard mouthfeel and weak ductility. On the other hand, as the content of potato fiber increased, hardness and elasticity decreased while tensile strength showed a tendency to increase, and when the content of potato fiber was 0.5 to 2% by weight based on the total weight of the composition, soft noodles without hard mouthfeel were formed, thereby forming noodles that are easy to eat. However, if it is more than 5.0% by weight, the noodles are easily cut, forming noodles unsuitable for cooking and eating.

Therefore, it could be seen that, in the present invention, protein-containing noodles with excellent textural properties and mouthfeel may be prepared by adding potato fiber and adjusting the content to a specific range.

### Experimental Example 3: Characterization of protein-containing noodles according to calcium chloride content in coagulation water

Using the method of Preparative Example, protein-containing noodles were prepared by varying the calcium chloride content in the coagulation water, and physical properties and preference of each noodle were measured.

The calcium chloride concentration was adjusted as shown in Table 3 below, and a paste was prepared by adding 95 parts by weight of bean milk, 0.7 parts by weight of potato fiber, 1.7 parts by weight of waxy corn starch, 1.5 parts by weight of sodium alginate, 0.5 parts by weight of refined salt, 0.5 parts by weight of preservative, and 0.1 parts by weight of golden chlorella based on 100 parts by weight of purified water.

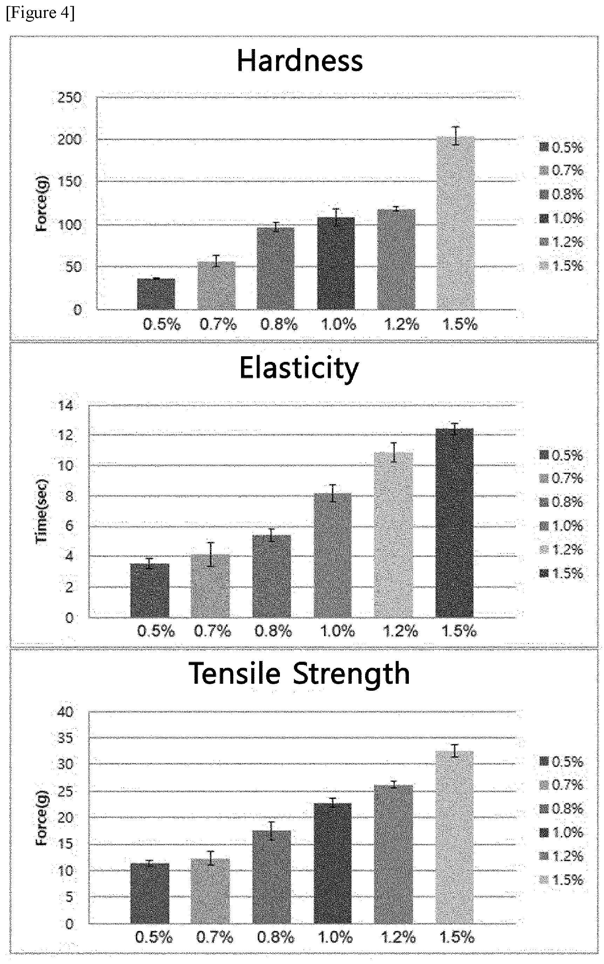

Hardness, elasticity, tensile strength, and mouthfeel were measured for each prepared noodle, and the results are shown in Figure 4.

Referring to the results of Figure 4, if the calcium chloride concentration in the coagulation water was 0.5% by weight or more, a noodle strip could be formed, and as the calcium chloride concentration increased, the hardness, elasticity and tensile strength increased. It was confirmed that if the calcium chloride concentration was 0.5 to 1.2% by weight, soft, elastic and chewy mouthfeel appeared, and if the calcium chloride concentration was more than 1.5% by weight, the mouthfeel of the noodles was very poor because it was too hard and tough.

Therefore, it could be seen in the present invention that when the calcium chloride concentration in the coagulation water was 0.5 to 1.2% by weight, it reacted optimally with each raw material in the paste, thereby forming protein-containing noodles with excellent texture and mouthfeel.

From the above description, those of ordinary skill in the technical art to which the present invention pertains will understand that the present invention may be implemented in other specific forms without changing the technical spirit or essential characteristics thereof. In this regard, it should be understood that the examples described above are illustrative and not restrictive in all respects. It should be construed that all changes or modifications derived from the meaning and scope of the claims to be described later rather than the detailed description and their equivalent concepts are included in the scope of the present invention.

## Claims

1. A composition for preparing a protein-containing noodle comprising vegetable protein, potato fiber, alginic acid, and starch.

2. The composition for preparing a protein-containing noodle according to claim 1, wherein the vegetable protein is included in an amount of 60 to 98% by weight, and the potato fiber is included in an amount of 0.2 to 15% by weight, based on the total weight of the composition.

3. The composition for preparing a protein-containing noodle according to claim 1, wherein the alginic acid is included in an amount of 0.5 to 15% by weight, and the starch is included in an amount of 0.5 to 15% by weight, based on the total weight of the composition.

4. The composition for preparing a protein-containing noodle according to claim 1, wherein the vegetable protein is a bean protein.

5. The composition for preparing a protein-containing noodle according to claim 4, wherein the bean includes one or more selected from the group consisting of *Glycine max,* Seoritae (green kernel black beans), *Phaseolus vulgaris, Cicer arietinum, Lens culinaris, Rhynchosia nulubilis,* and *Canavalia gladiata.*

6. The composition for preparing a protein-containing noodle according to claim 4, wherein the bean protein includes one or more selected from the group consisting of bean powder, bean milk, and tofu.

7. A method for preparing a protein-containing noodle, comprising the steps of:
mixing water with a composition for preparing a protein-containing noodle comprising vegetable protein, potato fiber, alginic acid and starch to form a paste; and
discharging the paste to coagulation water containing calcium chloride to coagulate it in the form of noodles.

8. The method for preparing a protein-containing noodle of claim 7, wherein water is mixed in an amount of 80 to 500 parts by weight based on 100 parts by weight of the composition for preparing a protein-containing noodle in the step of forming a paste.

9. The method for preparing a protein-containing noodle of claim 7, wherein the calcium chloride concentration in the coagulation water is 0.2 to 4% by weight.

10. A protein-containing noodle comprising vegetable protein, potato fiber, alginic acid, and starch, prepared by the method of any one of claims 7 to 9.
